(19) Europäisches Patentamt
European Patent Office
Office européen des brevets

(11) EP 4 346 001 A1

(12) EUROPEAN PATENT APPLICATION
published in accordance with Art. 153(4) EPC

(43) Date of publication:
03.04.2024 Bulletin 2024/14

(21) Application number: 23816190.5

(22) Date of filing: 16.02.2023

(51) International Patent Classification (IPC):
$H01M\ 50/457^{(2021.01)}$  $H01M\ 50/446^{(2021.01)}$
$H01M\ 50/431^{(2021.01)}$  $H01M\ 50/489^{(2021.01)}$
$H01M\ 10/0525^{(2010.01)}$

(52) Cooperative Patent Classification (CPC):
H01M 10/0525; H01M 50/431; H01M 50/446;
H01M 50/457; H01M 50/489; Y02E 60/10

(86) International application number:
PCT/KR2023/002256

(87) International publication number:
WO 2023/234518 (07.12.2023 Gazette 2023/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.06.2022 KR 20220068533

(71) Applicant: LG Energy Solution, Ltd.
Seoul 07335 (KR)

(72) Inventors:
• LEE, So Yeong
Daejeon 34122 (KR)

• KIM, Kyung Tae
Daejeon 34122 (KR)
• PARK, So Jung
Daejeon 34122 (KR)
• BAE, Kyeong Hui
Daejeon 34122 (KR)
• BAE, Won Sik
Daejeon 34122 (KR)
• JEONG, So Mi
Daejeon 34122 (KR)

(74) Representative: Hoffmann Eitle
Patent- und Rechtsanwälte PartmbB
Arabellastraße 30
81925 München (DE)

(54) **SEPARATOR FOR LITHIUM SECONDARY BATTERY AND LITHIUM SECONDARY BATTERY COMPRISING SAME**

(57) According to the present disclosure, a separator for a lithium secondary battery having excellent heat resistance, adhesive strength, and insulation performance is provided. A separator for a lithium secondary battery according to one aspect of the present disclosure includes a porous polymer substrate, a first coating layer formed on one side surface of the porous polymer substrate, a second coating layer formed on the other side surface of the porous polymer substrate, a first aqueous binder layer formed on a surface of the first coating layer, and a second aqueous binder layer formed on a surface of the second coating layer. The first coating layer and the second coating layer each include inorganic particles and a coating layer binder, in which the inorganic particles include aluminum nitride (AlN). The first aqueous binder layer and the second aqueous binder layer include different types of particle type binders. The particle type binder includes at least one selected from fluorine-based binders and acrylic binders.

FIG.1

## Description

### Technical Field

The present disclosure claims the benefit of the filing date of Korean Patent Application No. 10-2022-0068533 filed with the Korean Patent Office on June 3, 2022, the entire contents of which are incorporated herein by reference.
The present disclosure relates to a separator for a lithium secondary battery and to a lithium secondary battery including the same.

### Background Art

With the advancement of technology development and the increase in demand for mobile devices, demand for secondary batteries as an energy source is rapidly increasing. Recently, secondary batteries have been used as a power source for electric vehicles (EVs) and hybrid electric vehicles (HEVs). Accordingly, much research is being conducted on secondary batteries for meeting diverse needs. In particular, there is a high demand for lithium secondary batteries having high energy density, high discharge voltage, and for high output stability. Among them, lithium secondary batteries used as a power source for electric vehicles and hybrid electric vehicles, high power output characteristics are required to intensively output a large amount of energy in a short period of time.
A lithium secondary battery is composed of a cathode, an anode, an electrolyte, and a separator and among them, the separator is required to have an insulating property for electrically isolating the cathode and anode from each other and is required to have a high ionic conductivity based on a high porosity to increase the transmission of lithium ions.
As a separator for a lithium secondary battery, a porous substrate having multiple pores and being based on a polymer such as polyolefin is used.
In order to enhance the thermal resistance characteristics of a porous polymer substrate, a separator has been developed in which a porous coating layer containing a binder polymer and inorganic particles is formed on a polymer substrate.
The separator having the porous coating layer described above is prepared by dispersing inorganic particles in a polymer solution including a solvent and a binder polymer dissolved in the solvent, to prepare a one-component slurry, and then applying and drying the one-component slurry on the surface of a porous polymer substrate. The separator having the porous coating layer still needs to be improved in terms of heat resistance.
On the other hand, electrode assemblies are typically manufactured through a lamination process in which a separator and an electrode are bonded by heat and pressure. As a method of manufacturing an electrode assembly, a zig-zag stacking (ZZS) method is developed in which multiple unit electrodes, each unit electrode including a cathode and an anode, are stacked with an interposed separator in a zig-zag fashion. In this ZZS method, the separator and the electrode are bonded through a hot press process of applying heat and pressure. In this process, the higher the applied heat temperature and pressure, the higher the bonding strength between the electrode and the separator.
However, when an oil-based binder is used to manufacture a separator having a porous coating layer, there is a problem that the adhesive strength between the electrode and the separator is not sufficient after electrolyte is injected into the electrode assembly. Therefore, it is necessary to solve the problem that the electrode and the separator are folded when producing a battery as an end product and the problem that lithium (Li) precipitates due to an increase in interface resistance between the electrode and the separator.
In addition, in order to obtain a lithium secondary battery with a high energy density, thinning a separator is required. Typical porous polymer substrates having a normal thickness is unlikely to have insulation problems due to a sufficient thickness even though the pressing force is locally increased due to inorganic particles in the porous coating layer. However, in the case of a thin, porous polymer substrate having a thickness of 12 $\mu$m or less, the inorganic particles of the porous coating layer are locally clumped together, and spikes of the clumped inorganic particles may press the separator, thereby causing damage to the porous polymer substrate of the separator. In this case, there is a concern that the insulation properties of the separator are deteriorated.

### Disclosure

### Technical Problem

Accordingly, according to one aspect of the present disclosure, there is provided a separator for a lithium secondary battery having excellent heat resistance, adhesive strength, and insulation performance.
Specifically, the present disclosure is intended to provide a separator for a lithium secondary battery having excellent heat resistance even when using a porous polymer substrate, having good adhesive strength with an electrode, and good insulation performance while having a reduced thickness.

According to another aspect of the present disclosure, there is provided a lithium secondary battery including the separator having the characteristics described above.

**Technical Solution**

One aspect of the present disclosure provides a separator for a lithium secondary battery according to embodiments described below.

According to a first embodiment, there is provided a separator for a lithium secondary battery, the separator including:

a porous polymer substrate; a first coating layer formed on one side surface of the porous polymer substrate; a second coating layer formed on the other side surface of the porous polymer substrate; a first aqueous binder layer formed on a surface of the first coating layer; and a second aqueous binder layer formed on a surface of the second coating layer, in which the first coating layer and the second coating layer each independently include inorganic particles and a coating layer binder, the inorganic particle includes aluminum nitride (AlN), the first aqueous binder layer includes a first particle type binder, the second aqueous binder layer include a second particle type binder, the first particle type binder and the second particle type binder are different from each other, and each of the first particle type binder and the second particle type binder is independently a fluorine-based binder.

According to a second embodiment, in the first embodiment,

the first particle type binder and the second particle type binder each may have an average particle diameter $D_{50}$ of 0.05 to 0.5 $\mu$m.

According to a third embodiment, in the first or second embodiment,

the fluorine-based binder may include: poly(vinylidenefluoride) (PVDF); a copolymer of a vinylidenefluoride monomer and one type or 2 or more types selected from trifluoroethylene (TrFE), tetrafluoroethylene (TFE), hexafluoropropylene (HFP), trichloroethylene (TrCE), trichlorofluoroethylene (TCFE), chlorotrifluoroethylene (CTFE), polymethylmethacrylate (PMMA) polyvinylacetate (PVAc); or a mixture of two or more thereof.

According to a fourth embodiment, in any one of the first to third embodiments,

the acrylic-based binder may include poly(methylmethacrylate), poly(ethylhexyl acrylate), poly(butylacrylate), poly(acrylonitrile), a copolymer of ethylhexyl acrylate and methyl methacrylate, a copolymer of butylacrylate and methyl methacrylate, an ethyl acrylate-acrylic acid-N,N-dimethylacrylamide copolymer, an ethyl acrylate-acrylic acid-2-(diethylamino)ethyl acrylate copolymer, an ethyl acrylate-acrylic acid-N, N-diethylacrylamide copolymer, an ethyl acrylate-acrylic acid-2-(diethylamino)ethyl acrylate, or a mixture of two or more thereof.

According to a fifth embodiment, in any one of the first to fourth embodiments,

the coating layer binder may include a water-based particle type binder, and the coating layer binder may be the same as or different from the binder included in the first aqueous binder layer and the second aqueous binder layer.

According to a sixth embodiment, in any one of the first to fifth embodiments,

the separator may have a dry adhesive strength of 70 gf/25 mm or more with respect to an electrode.

According to a seventh embodiment, in any one of the first to sixth embodiments,

the separator may have a wet adhesive strength of 10 gf/25 mm or more with respect to an electrode.

According to an eighth embodiment, in any one of the first to seventh embodiments,

an adhesive strength between the porous polymer substrate and either one or both of the first coating layer and the second coating layer may be 60 gf/15 mm or more.

According to a ninth embodiment, in any one of the first to eighth embodiments,

each of the first coating layer and the second coating layer may have a thickness of 5 $\mu$m or less.

According to a tenth embodiment, in any one of the first to ninth embodiments,

each of the first aqueous binder layer and the second aqueous binder layer may have a thickness of 2 $\mu$m or less.

According to an eleventh embodiment, in any one of the first to tenth embodiments,

the porous polymer substrate may have a thickness of 15 $\mu$m or less.

Another aspect of the present disclosure provides a lithium secondary battery according to an embodiment described below.

According to a twelfth embodiment,

there is provided a lithium secondary battery including an electrode assembly including a cathode, an anode, and a separator interposed between the cathode and the anode, in which the separator is the separator according to any one of the first to eleventh embodiments.

**Advantageous Effects**

According to one aspect of the present disclosure, there can be provided a separator that has improved heat resistance due to a structure in which the surface of a porous polymer substrate is coated with inorganic particles.

In addition, there can be a separator that has improved adhesive strength with respect to an electrode due to the presence the aqueous binder layer including the particle type binder on the coating layer of the separator. Particularly, there is an advantage that the adhesive strength between the electrode and the separator is improved even after electrolyte is injected into the electrode assembly including the separator.

Furthermore, there can be provided a separator having a uniform quality and maintaining insulation performance with a reduced thickness thereof.

According to another aspect of the present invention, due to the enhanced characteristics of the separator described above, a bonding process for bonding the separator and an electrode can be performed under alleviated heat and pressure conditions, thereby damage to the separator during the bonding with the electrode can be prevented or alleviated.

## Description of Drawings

The following drawings attached to the present specification illustrate preferred embodiments of the present disclosure and serve to aid understanding understand of the spirit of the present disclosure in conjunction with the description herein. Therefore, the present disclosure should not be construed as being limited to those illustrated in the drawings.

   FIG. 1 is a schematic diagram of a separator according to one embodiment of the disclosure; and
   FIG. 2 is a schematic diagram of a separator according to one embodiment of the present disclosure.

## Best Mode

Hereinafter, embodiments of the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe its invention in the best way possible.

It will be further understood that the terms "comprise", "include", or "has", when used in this specification, specify the presence of an element, but do not preclude the presence or addition of one or more other elements unless the context clearly indicates otherwise.

In addition, as used herein, "comprise" and/or "comprising" specify the presence of shapes, numbers, steps, operations, members, elements, and/or combinations thereof, and do not preclude the presence or addition of one or more other shapes, numbers, operations, elements, and/or combinations thereof.

As used herein, the singular forms "a", "an", and "the" are intended to include the plural forms as well unless the context clearly indicates otherwise.

The numerical ranges expressed using the term "to" herein refer to the numerical ranges including the values specified ahead or behind of the term as lower limit values and upper limit values, respectively. When multiple numerical values are mentioned for an upper limit or a lower limit of any numerical range, the range disclosed herein can be understood as a range having any one of the mentioned multiple upper limit values as an upper limit value thereof and any one of the multiple lower limit values as a lower limit value thereof.

The characteristic "having pores" herein means that a fluid of a gaseous and/or liquid phase is passable from one side to the other side of an object through pores formed in the object and through a structure connecting the pores.

In the present specification, the separator has a porous property having multiple pores, and the separator serves as a porous ion-conducting barrier that prevents an anode and a cathode from being electrically connected and allows transmission of ions, in an electrochemical device such as a lithium secondary battery.

Hereinafter, a lithium secondary battery separator according to one embodiment of the present disclosure will be described in detail.

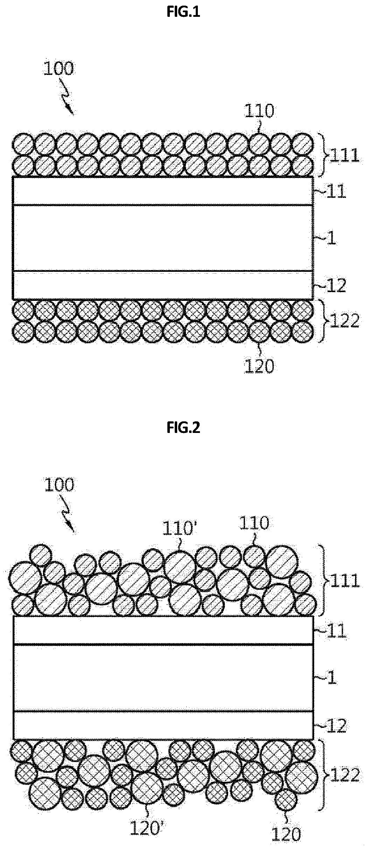

FIG. 1 is a schematic diagram of a separator for a lithium secondary battery according to one aspect of the present disclosure.

According to one aspect of the present disclosure, there is provided a separator 100 for a lithium secondary battery. The separator 100 includes: a porous polymer substrate 1; a first coating layer formed on one side surface of the porous polymer substrate 1; a second coating layer 12 formed on the other side surface of the porous polymer substrate 1; a first aqueous binder layer 111 formed on a surface of the first coating layer 11; and a second aqueous binder layer 122 formed on a surface of the second coating layer 12, in which the first coating layer 11 and the second coating layer 12 each independently include inorganic particles and a coating layer binder, the inorganic particle includes aluminum nitride (AlN), the first aqueous binder layer 111 includes a first particle type binder 110, the second aqueous binder layer 122 include a second particle type binder 120, the first particle type binder and the second particle type binder are different from each other, and the first particle type binder 110 and the second particle type binder 120 are each independently a fluorine-based binder, an acrylic binder, or a mixture of two or more thereof.

In one embodiment of the present disclosure, when assembling an electrode assembly including a cathode, an anode, and a separator interposed between the cathode and the anode, the separator includes an aqueous binder layer on each of the outermost surfaces thereof that come into contact with the cathode and the anode. In the present specification, the aqueous binder layer formed on the outermost surface on a first side of the separator is referred to as a first aqueous binder layer 111 and the aqueous binder layer formed on the outermost surface on a second side of the separator is referred to as a second aqueous binder layer 122.

Each of the first aqueous binder layer and the second aqueous binder layer contains a particle type binder. In the present specification, the particle type binder contained in the first aqueous binder layer is referred to as a first particle type binder, and the particle type binder contained in the second aqueous binder layer is referred to as a second particle type binder.

In the present specification, the particle type binder means that the binder is present in a particle form in the aqueous binder layer. Specifically, the particle type binder has a low solubility in water-based solvents and is dispersed as particles in the water-based solvents.

In one embodiment of the present disclosure, the water-based solvent may be, for example, water, a hydrochloric acid aqueous solution, a sodium hydroxide aqueous solution, or a mixture solution of two or more thereof, but is not limited thereto.

In one embodiment of the present disclosure, the particle type binder may have a single-phase structure, a core-shell structure, or a multi-phase structure such as a core-first shell-second shell structure, but the structure of the particle type binder is not limited thereto.

In one embodiment of the present disclosure, the particle type binder may have, for example, a spherical, oval, plate-shaped, or irregular particle shape, but the particle shape is not be limited thereto.

In one embodiment of the present disclosure, the particle type binder may have an average particle diameter $D_{50}$ of 0.05 to 0.5 $\mu$m and specifically 0.1 to 0.4 $\mu$m, but the particle diameter is not limited thereto.

In the present specification, the average particle diameter $D_{50}$ refers to the particle diameter at 50% in the cumulative distribution of particles sorted by the particle diameter. The average particle diameter $D_{50}$ may be measured using a laser diffraction method. Specifically, after the particles to be measured are dispersed in a dispersion medium, the dispersion medium is introduced into a commercially available laser diffraction particle diameter analyzer (for example, Microtrac S3500), and the difference in diffraction pattern according to the particle diameter is measured when the particles pass through a laser beam. From the diffraction pattern differences, the particle diameter distribution can be calculated. By obtaining the particle diameter at 50% of the cumulative distribution of the number of particles sorted by the particle diameter, the $D_{50}$ can be measured.

FIG. 2 is a schematic diagram of a lithium secondary battery separator according to one aspect of the present disclosure.

In one embodiment of the present disclosure, as illustrated in FIG. 2, the first aqueous binder layer 111 may include two or more types of first particle type binders 110 and 110' having different particle diameters. In addition, the second aqueous binder layer 122 may include two or more types of second particle type binders 120 and 120' having different particle diameters.

In the present disclosure, the particle type binder includes a fluorine-based binder, an acrylic binder, or a mixture of two or more thereof.

For the fluorine-based binder, any fluorine-based binder can be used without limitation as long as it can impart adhesive strength to a separator for a secondary battery. The fluorine-based binder may include: for example, a homopolymer of a vinylidenefluoride monomer, that is, poly(vinylidenefluoride) (PVDF); a copolymer of a vinylidenefluoride monomer and one type or 2 or more types selected from trifluoroethylene (TrFE), tetrafluoroethylene (TFE), hexafluoropropylene (HFP), trichloroethylene (TrCE), trichlorofluoroethylene (TCFE), chlorotrifluoroethylene (CTFE), polymethylmethacrylate (PMMA), and polyvinylacetate (PVAc); or a mixture of two or more thereof.

In one embodiment of the present disclosure, the fluorine-based binder may include polyvinylidene fluoride.

For the acrylic binder, any acrylic binder can be used without limitation as long as it can impart adhesive strength to a separator for a secondary battery. The acrylic binder may be for example, a homopolymer of an acrylic monomer, a copolymer of two or more acrylic monomers, or a mixture of two or more thereof. Specifically, the acrylic binder may include poly(methylmethacrylate), poly(ethylhexyl acrylate), poly(butylacrylate), poly(acrylonitrile), a copolymer of ethylhexyl acrylate and methyl methacrylate, a copolymer of butylacrylate and methyl methacrylate, an ethyl acrylate-acrylic acid-N,N-dimethylacrylamide copolymer, an ethyl acrylate-acrylic acid-2-(diethylamino)ethyl acrylate copolymer, an ethyl acrylate-acrylic acid-N,N-diethylacrylamide copolymer, an ethyl acrylate-acrylic acid-2-(diethylamino)ethyl acrylate copolymer, or a mixture of two or more thereof.

In one embodiment of the present disclosure, the acrylic binder may include polymethylmethacrylate.

In the present disclosure, the first aqueous binder layer includes a first particle type binder, and the second aqueous binder layer includes a second particle type binder. In this case, the first particle type binder and the second particle type binder are different from each other. According to one embodiment of the present disclosure, with the use of the first particle type binder and the second particle type binder different from the first particle type binder, the adhesive strength of the separator with respect to the electrode can be improved in a dry state and a wet state.

In one embodiment of the present disclosure, the first particle type binder represents an aggregation of particle type binders contained in the first aqueous binder layer. That is, the first particle type binder may include one or more types of particle type binders or may include particle type binders having different shapes. For example, the first particle type binder may represent an aggregation of binders, including two or more binders among the fluorine-based binders mentioned above. In addition, the first particle type binder may represent an aggregation of binders, including two or more binders among the acrylic binders mentioned above. In addition, the first particle type binder may include at least one of the above-listed fluorine-based binders and at least one of the above-listed acrylic binders.

In another embodiment of the present disclosure, the second particle type binder represents an aggregation of particle type binders contained in the second aqueous binder layer.

In one embodiment of the present disclosure, when the aqueous binder layer formed on the surface of the outermost layer of the separator, which is in contact with the cathode of the electrode assembly, contains the fluorine-based binder, it is possible to exhibit an advantageous effect in terms of adhesive strength between the separator and the electrode (i.e., cathode). In addition, when the aqueous binder layer formed on the surface of the outermost layer of the separator, which is in contact with the anode of the electrode assembly, includes the acrylic binder, it is possible to exhibit an advantageous effect in terms of adhesive strength between the separator and the electrode (i.e., anode).

Specifically, in one embodiment of the present disclosure, when the first particle type binder includes one or more of the aforementioned fluorine-based binders, the second particle type binder may include one or more of the aforementioned acrylic binders. In this case, when the first particle type binder includes the fluorine-based binder and the second particle type binder includes the acrylic binder, at the time of assembling an electrode assembly including the separator, the first aqueous binder layer serves as the surface of the outermost layer of the separator, which comes into contact with the cathode, and the second aqueous binder layer may serve as the surface of the outermost layer of the separator, which comes into contact with the anode.

In one embodiment of the present disclosure, the first particle type binder may further include the acrylic binder in an amount that does not impair the effect of the present disclosure in addition to the fluorine-based binder. However, the present disclosure is not limited thereto.

In another embodiment of the present disclosure, the second particle type binder may further include the fluorine-based binder in an amount that does not impair the effect of the present disclosure in addition to the acrylic binder. However, the present disclosure is not limited thereto.

In one embodiment of the present disclosure, the first aqueous binder layer and the second aqueous binder may each independently include the binder in an amount of 100% by weight. In addition, the first aqueous binder layer and the second aqueous binder layer may each independently further include a soluble binder in an amount that does not impair the effect of the present disclosure in addition to the particle type binder. However, the present disclosure is not limited thereto.

In one embodiment of the present disclosure, each of the first aqueous binder layer and the second aqueous binder layer may independently have a thickness of, for example, 2 $\mu$m or less, specifically a thickness of 0.1 um to 1.5 um, more specifically a thickness of 0.3 um to 1 $\mu$m, a thickness of 0.4 um to 0.8 um, or a thickness of 0.5 um. When the thickness of each of the aqueous binder layers is within the ranges mentioned above, advantageous effects can be exhibited in terms of adhesive strength and air permeability of the separator, but the present disclosure is not limited thereto.

In the present specification, unless otherwise defined, the thickness of each layer may be a thickness measured through differential scanning microscopy (SEM) observation of a cross section of a separator or may be a thickness measured using a known thickness meter. The known thickness meter may be as a contact-type thickness meter, for example, a VL-50S-B device manufactured by Mitutoyo but is not limited thereto.

In one embodiment of the present disclosure, each of the first aqueous binder layer and the second aqueous binder layer may be independently an aqueous binder layer formed by applying a slurry in which the particle type binder is dispersed in an appropriate aqueous solvent to the surface of a coating layer and drying the applied slurry. However, the method of forming the aqueous binder layer is not limited thereto.

As described above, the aqueous solvent may be, for example, water, a hydrochloric acid aqueous solution, a sodium hydroxide aqueous solution, or a mixture solution of two or more thereof, but is not limited thereto.

In one embodiment of the present disclosure, the slurry in which the particle type binder is dispersed may have, for example, a solid content of 2% to 20% by weight, and specifically 3% to 10% by weight, but the present disclosure is not limited thereto.

In the present disclosure, the first aqueous binder layer and the second aqueous binder layer are formed on the surfaces of the first coating layer and the second coating layer, respectively.

In one embodiment of the present disclosure, the first aqueous binder layer and the second aqueous binder layer may be formed in surface contact with the surfaces of the first coating layer and the second coating layer, respectively.

In the present disclosure, the first coating layer and the second coating layer each include inorganic particles and a coating layer binder.

In the present disclosure, the inorganic particles include aluminum nitride (AlN) to ensure heat resistance and insulation of the separator and to ensure good adhesion to the porous substrate in the separator. However, the effects of the present disclosure are not limited thereto. According to one embodiment of the present disclosure, the use of aluminum nitride as the inorganic particles increases the dielectric breakdown voltage of the separator compared to other inorganic particles.

In one embodiment of the present disclosure, the first coating layer and the second coating layer may each independently further include electrochemically stable inorganic particles that can be used in separators for a secondary battery in addition to the aluminum nitride (AlN) . For example, in one embodiment of the present disclosure, as the inorganic particles that can be further included in each of the first coating layer and the second coating layer, any inorganic particles can be used without limitation as long as they do not undergo an oxidation reaction and/or a reduction reaction at voltages within an operating voltage range (for example, 0 to 5 V based on Li/Li+) of a battery to which the separator is applied.

In one embodiment of the present disclosure, when at least one of the first coating layer and the second coating layer includes additional inorganic particles in addition to aluminum nitride as the inorganic particles, the content of the aluminum nitride may be, for example, 5% to 90% by weight, specifically 10% to 85% by weight, with respect to the total weight of the inorganic particles per one coating layer. The aluminum nitride content within the ranges is advantageous in terms of thermal resistance of the separator, but the present disclosure is not limited thereto.

Examples of the additional inorganic particles include for example, a high dielectric constant inorganic particle having a dielectric constant of at least 1, and preferably at least 10, an inorganic particle having piezoelectricity, an inorganic particle having a lithium ion transportation ability, and the like.

Examples of the high dielectric constant inorganic particle include $SrTiO_3$, $SnO_2$, $CeO_2$, MgO, NiO, CaO, ZnO, $ZrO_2$, $Y_2O_3$, $Al_2O_3$, AlOOH, $Al(OH)_3$, $TiO_2$, and SiC. One or a mixture of two or more types of the high dielectric constant inorganic particles may be used, but the present disclosure is not limited thereto.

The inorganic particles having piezoelectricity refer to materials that serve as insulators under atmospheric pressure but serve as electrical conductors under a predetermined pressure due to the internal structural changes thereof. The inorganic particles with piezoelectricity have a high dielectric constant value of 100 or more. In addition, when a certain pressure is applied to such inorganic particles and thus the inorganic particles are stretched or compressed, charges are generated. Since one side is positively charged and the other side is negatively charged, a potential difference is generated between the two sides. In the case of using such inorganic particles with piezoelectricity, when an internal short circuit occurs between both electrodes due to an external impact such as local crush or nail stabbing, a potential difference occurs within the particles due to the piezoelectricity of the inorganic particles, whereby electron movement occurs between the two electrodes, that is, a minute current flow is made, resulting in a gentle voltage drop of the battery. That is, the safety of the battery is improved. Examples of inorganic particles having piezoelectricity include $BaTiO_3$, $Pb(Zr,Ti)O_3$ (PZT), $Pb_{1-x}La_xZr_{1-y}Ti_yO_3$ (PLZT), $Pb(Mg_{1/3}Nb_{2/3})O_3$-$PbTiO_3$ (PMN-PT), hafnium oxide ($HfO_2$), or mixtures thereof, but the present disclosure is not limited thereto.

The inorganic particles having a lithium ion transportation ability refer to inorganic particles that contain a lithium element but does not store lithium ions. These inorganic particles have a function of transporting lithium ions. The inorganic particles having a lithium ion transportation ability can transport and move lithium ions due to a kind of defect existing inside the particle structure. Therefore, these inorganic particles improve lithium ion conductivity in the battery, thereby improving the battery performance. Examples of the inorganic particles having a lithium ion transportation ability include: $(LiAlTiP)_xO_y$-based glasses (x<4, 0<y<13) such as lithium phosphate ($Li_3PO_4$), lithium titanium phosphate (($Li_x$-$Ti_y(PO_4)_3$, 0<x<2, 0<y<z<3), lithium aluminum titanium phosphate ($Li_xAl_yTi_z(PO_4)_3$, 0<x<2, 0<y<z<3), and $14Li_2O$-$9Al_2O_3$-$38TiO_2$-$39P_2O_5$, etc.; lithium germanium thiophosphate ($Li_xGe_yP_zS_w$, 0<x<4, 0<y<1, 0<z<1, 0<w<5) such as $Li_{3.25}Ge_{0.25}P_{0.75}S_4$, etc.; lithium nitrides ($Li_xN_y$, 0<x<y<2) such as $Li_3N$, etc.; $SiS_2$-based glasses ($Li_xSi_yS_z$, 0<x<3, 0<2, 0<z<4) such as $Li_3PO_4$-$Li_2S$-$SiS_2$, etc.; $P_2S_5$-based glasses ($Li_xP_yS_z$, 0<x<3, 0<y<3, 0<z<7) such as LiI-$Li_2S$-$P_2S_5$, etc.; and mixtures thereof. However, the present disclosure is not limited thereto.

In one embodiment of the present disclosure, the inorganic particles may have an average particle diameter $D_{50}$ of 10 to 1,500 nm and specifically 150 to 1,000 nm. However, the present disclosure is not limited thereto. The inorganic particles having an average particle diameter $D_{50}$ within the range described above are advantageous in terms of adhesive strength of the coating layer and porosity, but the present disclosure is not limited thereto.

In the present disclosure, the first coating layer and the second coating layer each include inorganic particles containing aluminum nitride and a coating layer binder.

The coating layer binder may provide adhesion of the coating layer to the porous polymer substrate and the electrode while connecting and fixing the inorganic particles.

In one embodiment of the present disclosure, the coating layer binder may be one polymer or a mixture of polymers selected from the group consisting of polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cyanoethylpullulan, cyanoethylpolyvinylalcohol, cyanoethylcellulose, cyanoethylsucrose, pullulan, and carboxyl methyl cellulose. However, the present disclosure is not particularly limited thereto.

In one embodiment of the present disclosure, the type of the coating layer binder contained in the coating layer may be the same as or different from the type of the particle type binder contained in the aqueous binder layer formed on the surface of the coating layer. Specifically, the type of the coating layer binder contained in the coating layer may be selected independently of the type of particle type binder contained in the aqueous binder layer adjacent to the coating layer.

In one embodiment of the present disclosure, the coating layer binder may include, for example, an aqueous particle type binder. When the coating layer binder includes an aqueous particle type binder, the aqueous particle type binder has low solubility in an aqueous solvent, and thus may be dispersed as particles in the aqueous solvent. In one embodiment of the present disclosure, the aqueous solution may be, for example, water, a hydrochloric acid aqueous solution, a sodium hydroxide aqueous solution, or a mixture solution of two or more thereof, but is not limited thereto.

In one embodiment of the present disclosure, the glass transition temperature (Tg) of the coating layer binder is, for example, in a range of -50°C to 0°C, or specifically a range of -30°C to -20°C or -25°C. When the glass transition temperature of the coating layer binder is within the ranges mentioned above, an advantageous effect can be exhibited in terms of the adhesive strength of the separator, but the present disclosure is not limited thereto.

In the present specification, the glass transition temperature (Tg) may be a value measured by, for example, dynamic mechanical analysis (DMA). For example, the glass transition temperature may be a value measured according to the DMA method specified in ASTM D4065.

In one embodiment of the present disclosure, the composition of the first coating layer and the composition of the second coating layer may be independently determined. For example, the first coating layer and the second coating layer may have the same composition or may have different compositions.

In one embodiment of the present disclosure, the configuration in which he first coating layer and the second coating layer have the same composition is advantageous in terms of thermal conductivity and insulation performance of the separator, but the present disclosure is not limited thereto.

In one embodiment of the present disclosure, the first coating layer and the second coating layer may each independently include the inorganic particles and the coating layer binder in a weight ratio of 1:99 to 50:50. The weight ratio may be appropriately adjusted within the mentioned range. For example, based on 100% by weight which is the sum of the weight of the inorganic particles and the coating layer binder, the coating layer binder accounts for 1% by weight or more, 5% by weight or more, or 10% by weight or more, 15% by weight or more, 20% by weight or more, 25% by weight or more, or 30% by weight or more, and the inorganic particles account for 70% by weight or more, 75% by weight or more, 80% by weight or more, 85% by weight or more, 90% by weight or more, 95% by weight or more, or 99% by weight or more. However, in the present disclosure, the weight ratio is not limited thereto. In one embodiment of the present disclosure, the coating layer is preferably a porous structure from the viewpoint of ion permeability. In one embodiment of the present disclosure, when the content of the coating layer binder is less than 1% by weight, not only the adhesive strength between the porous polymer substrate and the coating layer but also the adhesive strength between the coating layer and the aqueous binder layer is not sufficient. On the other hand, when the content is excessively high, the porosity of the coating layer decreases, and the resistance in the battery increases, which result in deterioration in the electrochemical characteristics of the battery.

For example, in one embodiment of the present disclosure, the first coating layer and the second coating layer each independently have a porosity of 5% to 95% by volume, 10% to 95% by volume, 20% to 90% by volume, 30% to 80% by volume, or 40% to 70% by volume. The porosity may be adjusted within the above-described range in order to secure ionic conductivity by securing sufficient passages through which ions can pass and to secure heat resistance and adhesiveness. Accordingly, the porosity of the porous coating layer may be appropriately adjusted within the above-described range while taking the electrochemical characteristics into account.

In the present specification, the term "porosity" refers to the ratio of the pore volume to the whole volume of a porous body, and is expressed as a percentage (%). The term "porosity" can be interchangeably used with other terms such as pore density or degree of porousness. In the present disclosure, the measurement method of the porosity is not particularly limited. In one embodiment of the present disclosure, for example, the porosity may be measured by Brunauer-Emmett-Teller (BET) measurement using nitrogen gas or mercury permeation (Hg porosimeter) or measured according to ASTM D2873. Alternatively, the net density of the separator is calculated from the density (apparent density) of the separator, the composition ratio of the materials included in the separator, and the density of each component, and the porosity of the separator is calculated from the difference between the apparent density and the net density.

In one embodiment of the present disclosure, the total thickness of the coating layer may be appropriately adjusted within the range of, for example, 1 um to 10 um. The total thickness of the coating layer is the sum of the thicknesses of all the coating layers formed on the surface of the porous polymer substrate. That is, it is the sum of the thickness of the first coating layer and the thickness of the second coating layer. When the total thickness of the coating layer satisfies the above-described range, it is advantageous in terms of the heat resistant improving effect of the inorganic particles and of the energy density increasing effect of the battery because the battery can be manufactured in a reduced thickness.

In one embodiment of the present disclosure, the thickness of the first coating layer and the thickness of the second coating layer may be each independently, for example, 5 $\mu$m or less, 4 $\mu$m or less, or specifically 1 to 3 $\mu$m.

In one embodiment of the present disclosure, each of the first coating layer and the second coating layer is formed by applying a slurry in which the coating layer binder is dissolved, and the aluminum nitride-containing inorganic particles are dispersed onto one surface of the porous polymer substrate and drying the applied slurry.

In one embodiment of the present disclosure, the slurry for forming the coating layer may be prepared by adding the coating layer binder and the aluminum nitride-containing inorganic particles to an appropriate solvent and mixing them. Specifically, the coating layer binder may be first added to a solvent to prepare a binder solution, and then the inorganic particles may be added and mixed thereto. Alternatively, the inorganic particles may be first added to the solvent and then the coating layer binder may be added and mixed. However, the present disclosure is not limited thereto.

In one embodiment of the present disclosure, the slurry for forming the coating layer may be an aqueous slurry. In this case, the aqueous solvent may be, for example, water, a hydrochloric acid aqueous solution, a sodium hydroxide aqueous solution, or a mixture solution of two or more thereof. However, the present disclosure is not limited thereto.

In one embodiment of the present disclosure, the porous polymer substrate refers to a film made of a polymer material having a plurality of pores. The porous polymer substrate is commonly used in separators for lithium secondary batteries.

In one embodiment of the present disclosure, the porous polymer substrate may be a polymer film made of a porous polyolefin-based material. In the case of using a polyolefin-based material for the porous polymer substrate, since a large difference between the shutdown temperature and the meltdown temperature of the separator for lithium secondary batteries can be realized, an advantageous effect of improving the stability of the separator can be obtained. However, the effect of the present disclosure is not limited thereto.

In one embodiment of the present disclosure, for example, the porous polyolefin-based material may be: polyethylene; polypropylene; polybutylene; polypentene; polyhexene; polyoctene; copolymers of two or more of ethylene, propylene, butene, pentene, 4-methylpentene, hexene, hepsene, and octene; or any mixture thereof, but is not limited thereto. In particular, the polyethylene includes low-density polyethylene (LDPE), linear low-density polyethylene (LLDPE), high-density polyethylene (HDPE), etc. Among them, high-density polyethylene having a high crystallinity and a high melting point is most preferably used.

In one embodiment of the present disclosure, when the porous polymer substrate includes both of polyethylene and polypropylene as polyolefins, shutdown characteristics and physical properties such as mechanical strength can be simultaneously improved, but the present disclosure is not limited thereto.

In one embodiment of the present disclosure, for example, the porosity of the porous polymer substrate may be within a range of 30% to 70% by volume. For example, the porosity of the porous polymer substrate may be 42% by volume or more, 45% by volume or more, 50% by volume or more, or 55% by volume or more within the aforementioned range. Alternatively, the porosity of the porous polymer substrate may be 60% by volume or less, 55% by volume or less, or 55% by volume or less within the aforementioned range. For example, the porosity of the porous polymer substrate may have a value in a range of 40% by volume or more and 65% by volume or less.

In one embodiment of the present disclosure, the pores of the porous polymer substrate have a diameter ($D_{50}$) in a range of 10 nm to 70 nm based on the longest diameter of the pores, a size of 65 nm or less within the range, or a size of 60 nm or less within the range. Considering the improvement of the resistance characteristics of the separator, it is preferable that the size and distribution of pores in the separator are uniform. Therefore, in the present disclosure, excellent resistance characteristics can be exhibited when the pore size is uniform, and the pores are evenly distributed while the pore diameter satisfies the above-specified range. The pore diameter $D_{50}$ may be defined in the same manner as the particle diameter $D_{50}$ described above. That is, the pore diameter $D_{50}$ refers to the diameter at 50% in the cumulative distribution of pores sorted by the pore diameter.

In one embodiment of the present disclosure, the pore size can be measured using a capillary flow porometer. It is measured by a method of wetting the pores of the separator with a liquid with known surface tension, then applying air pressure to the set separator, and determining the pressure (bubble point = max pore) at which the initial flow rate occurs. A specific example of such a capillary flow porometer is CFP-1500-AE manufactured by Porous Materials Inc.

In one embodiment of the present disclosure, the porous polymer substrate may have a thickness of, for example, 15 $\mu$m or less, and specifically 12 um or less. When the thickness of the porous polymer substrate is within the range mentioned above, advantageous effects can be exhibited in terms of the realization of thinner lithium secondary batteries and increased energy density, but the effects are not limited thereto. Specifically, in the case of using a thin porous polymer substrate, the inorganic particles in the porous coating layer may be locally clumped together, and spikes of the clumped inorganic particles may press the separator, thereby causing damage to the porous polymer substrate. In this case, there is a problem that the insulation properties of the separator are deteriorated. According to one embodiment of the present disclosure, even though the thickness of the porous polymer substrate is reduced to be within the numerical range described, since aluminum nitride is used as the inorganic particles present in the coating layer, the dielectric breakdown voltage of the separator can be increased, and thus the insulation performance of the separator can be increased.

In one embodiment of the present disclosure, the porous polymer substrate may be manufactured by a dry method in which a polymer is melted and extruded to be molded into a sheet, and the sheet is stretched to generate micro cracks between lamellas, which are crystal parts of the polymer, so that micro pores are formed. In addition, the porous polymer substrate may be manufactured by a wet method in which a polymer and a diluent are kneaded at a high temperature to form a single phase, the single phase is phase-separated into a polymer material and a plasticizer during a cooling process, and then the plasticizer is extracted to form pores, but the manufacturing method is not limited thereto.

The separator according to one aspect of the present invention may exhibit excellent adhesive strength with respect to an electrode.

The separator may exhibit excellent effects in at least one characteristic of dry adhesive strength and wet adhesive strength with the electrode.

In the present specification, the dry adhesive strength refers to an adhesive strength before an electrode assembly in which the separator and an electrode are bonded is impregnated with an electrolyte.

In the present specification, the wet adhesive strength refers to an adhesive strength after the electrode assembly in which the separator and the electrode are bonded is impregnated with an electrolyte.

In one embodiment of the present disclosure, the separator as described above may exhibit a dry adhesive strength of, for example, 70 gf/25 mm or more with respect to an electrode. The dry adhesive strength of the separator with respect to the electrode may be specifically 80 gf/25 mm or more, or 100 gf/25 mm or more. More specifically, it may have a value within the range of 150 gf/25 mm to 250 gf/25 mm, or the range of 160 gf/25 mm to 200 gf/25 mm.

In one embodiment of the present disclosure, the dry adhesive strength of the separator with respect to the electrode may be a dry adhesive strength of the separator with respect to an anode.

In the present specification, the dry adhesive strength with respect to the anode represents a value measured by a method described below. Natural graphite, SBR, CMC, and carbon black (90:2.5:2.5:5 in a weight ratio) are added to water to obtain an anode slurry, and the anode slurry is applied on a copper thin film (20 um thick) at a loading amount of 5 mg/cm$^2$, and then dried. Next, it is rolled in the conditions of 90°C and 8.5 MPa and cut into fragments with a size of 60 mm (length) and 25 mm (width) to prepare standard anode electrodes. Next, after cutting the separator to be evaluated into fragments with a size of 70 mm (length) x 25 mm (width), the separator fragment is placed such that the prepared standard anode is in contact with the coating layer, and is then laminated using a press in the conditions of 60°C and 6.5 MPa for 1 s, to prepare a specimen. The prepared specimen is attached and fixed to a glass plate using double-sided tape. In this case, the anode is placed facing the glass plate. The separator of the specimen is peeled off using Instron's UTM equipment at 25°C at an angle of 180° at a speed of 300 mm/min, and the strength at this time is measured and taken as the dry adhesive strength.

In one embodiment of the present disclosure, the separator described above may exhibit a wet adhesive strength of, for example, 10 gf/25 mm or more with respect to an electrode. The wet adhesive strength of the separator with respect to the electrode may be specifically 15 gf/25 mm or more, 20 gf/25 mm or more, or 30 gf/25 mm or more. More specifically, it may have a value within the range of 30 gf/25 mm to 80 gf/25 mm, the range of 35 gf/25 mm to 70 gf/25 mm, or the range of 36.5 gf/25 mm to 60 gf/25 mm.

In the present specification, the wet adhesive strength of the separator with respect to a cathode represents a value measured by a method described below. First, after assembling a mono-cell, an electrolyte is injected so that the electrode assembly is activated and is impregnated with the electrolyte. Thereafter, the electrode assembly taken out of the mono-cell is sampled to have a width of 25 mm, and the electrode assembly is fixed to a glass plate using double-sided tape in a state in which the electrode of the sampled electrode assembly faces the glass plate. The separator of the specimen is peeled off using Instron's UTM equipment at 25°C at an angle of 90° at a speed of 200 mm/min, and the strength at this time is measured and taken as the wet adhesive strength.

In one embodiment of the present disclosure, when assembling the mono-cell, the cathode may be a cathode(active material thickness: 120 $\mu$m) manufactured by preparing a cathode active material slurry with a solid content of 50% by weight, in which a cathode active material ($LiNi_{0.8}Mn_{0.1}Co_{0.1}O_2$), a conductive material (carbon black), a dispersant, and a binder resin (PVDF-HFP and PVDF mixture) are mixed with water at a weight ratio of 97.5:0.7:0.14:1.66, applying the slurry on a surface of a current collector (thickness: 10 $\mu$m), and drying the applied slurry. However, the cathode is not limited thereto.

In one embodiment of the present disclosure, when assembling the mono-cell, the anode may be an anode(active material layer thickness: 120 μm) manufactured by preparing an anode active material slurry with a solid content of 50% by weight, in which graphite, a conductive material (carbon black), a dispersant, and a fluorine-based binder resin are mixed with water in a weight ratio of 97.5:0.7:0.14:1.66, applying the slurry on a surface of a current collector (thickness: 10 μm), and drying the applied slurry. However, the anode is not limited thereto.

In one embodiment of the present disclosure, the activation process for preparing the electrode assembly may be performed at 55°C at a charging SOC of 60%, but is not limited thereto.

According to one embodiment of the present disclosure, the separator may exhibit excellent adhesive strength (peel strength) between the porous polymer substrate and the coating layer as well as excellent adhesive strength with respect to the electrode.

In one embodiment of the present disclosure, in the separator, the adhesive strength between the porous polymer substrate and each of the first coating layer and the second coating layer is, for example, 60 gf/15 mm or more.

In the present specification, the adhesive strength between the porous polymer substrate and the coating layer, that is, the peel strength, is a value obtained by, for example, cutting the separator into two specimens with a size of 80 mm (length) x 15 mm (width), attaching the two specimens to each other using double-sided tape, peeling at 25°C at an angle of 180° at a speed of 300 mm/min, and measuring the strength.

According to one embodiment of the present disclosure, the separator may exhibit excellent effects in terms of low thermal shrinkage rate and high dielectric breakdown voltage.

In one embodiment of the present disclosure, the separator may exhibit low thermal shrinkage rates in both the machine direction (MD) and the transverse direction (TD).

As used herein, the machine direction (MD) of the separator refers to the mechanical direction of the porous polymer substrate of the separator, and the transverse direction (TD) of the separator refers to a direction orthogonal to the machine direction.

The machine direction of the porous polymer substrate refers to the production running direction of the porous polymer substrate in the process of manufacturing the porous polymer substrate. Specifically, since the machine direction of the porous polymer substrate coincides with the orientation direction of the fibers in the porous polymer substrate, the machine direction can be identified by finding the orientation direction of the fibers in the porous polymer substrate to be prepared. For example, the orientation direction of fibers in the porous polymer substrate may be identified from a differential scanning microscope (SEM) image of a cross section of the porous polymer substrate. In addition, the machine direction can also be identified from an SEM image of a cross section of the separator including the porous polymer substrate. The orientation direction of the fibers, which is identified from the SEM image, may be taken as the machine direction (MD) of the porous polymer substrate and the machine direction (MD) of the separator.

In one embodiment of the present disclosure, the thermal shrinkage rate of the separator is, for example, 10% or less, 5% or less, 3% or less, 2% or less, 1% or less, or 0% in both the machine direction (MD) and the transverse direction (TD).

In the present specification, the thermal shrinkage rate of the separator may be evaluated in a manner disclosed below. A separator to be evaluated is cut into fragments with a 50 mm x 50 mm size, and the fragment is placed between A4 paper sheets and then in a 120°C convection oven for 1 hour. Next, the thermal shrinkage rates in the machine direction (MD) and the transverse direction (TD) are measured. The thermal shrinkage rate (%) is calculated by [(initial length - length after 120°C thermal treatment)/(initial length)] X 100.

In one embodiment of the present disclosure, for the accuracy of the measurement of the thermal shrinkage rate of the separator, the separator immediately after the production thereof is rested at 150°C for 30 minutes, and measurement is then immediately performed.

In one embodiment of the present disclosure, the dielectric breakdown voltage of the separator may be, for example, 1,000 V or higher, specifically 1,500 V or high, and more specifically a certain voltage within a range of 1,500 V to 2,500 V.

In the present specification, the dielectric breakdown voltage of the separator means a value measured by a method described below. The dielectric breakdown voltage is measured using an AC/DC/IR Hi-Pot tester. Specifically, release PET sheets with a 10 cm X 10 cm size are placed on top and bottom of the 5 cm x 5 cm fragment of the separator to be evaluated. The release PET sheets are placed in contact with the separator. A stack of the separator and release PET sheets is hot-pressed at a temperature of 70°C at a pressure of 5.2 MPa for 10 seconds to prepare a compressed separator sample. The prepared compressed separator sample is between aluminum jigs (an upper jig with a diameter of 30mm and a lower jig with a size of 50 mm x 100 mm) and the voltage at which the failure conditions (>0.5 mA, 3 sec) occur is detected using a Hi-pot tester. The measurement conditions are set to DC, a current of 0.5 mA, and a voltage step-up rate of 100 V/s (up to 3 kV). The measurement value is determined as an average value of 30 samples.

In one embodiment of the present disclosure, the separator is constructed such that a coating layer and an aqueous binder layer are sequentially formed on each side of a porous polymer substrate, thereby having excellent air permeability.

In one embodiment of the present disclosure, the separator may have an air permeability that is 10% or more higher and more specifically 15% or higher than the air permeability of the porous polymer substrate.

In the present specification, the air permeability (air passage time, Gurley) of each of the separator and the porous polymer substrate is measured by the method specified in the ASTM D-2873 standard. The Gurley value is measured using a Gurley type Densometer (No. 158) manufactured by Toyoseiki Seisaku-sho, Ltd. according to the JIS Gurlye measurement method. The air permeability value is expressed as the time in seconds it takes for 100 ml of air to pass through a 1 in$^2$-area cross section of a separator, under a pressure of 12.2 inH$_2$O. That is, the air permeability value is the passage time of air.

The air permeability increase rate can be evaluated according to the following equation, using the air permeability value measured in a manner described above:

```
Air permeability increase rate (%) = [(Air permeability of
the manufactured separator - air permeability of the porous
polymer substrate)/air permeability of the porous polymer
substrate] * 100
```

As described above, the separator according to one aspect of the present disclosure may have one or more characteristics among excellent adhesion to electrodes, low thermal shrinkage rate, high dielectric breakdown voltage, and high air permeability, but the effects of the present disclosure are not limited thereto.

According to another aspect of the present disclosure, there is provided a lithium ion secondary battery including the separator. The lithium ion secondary battery includes an electrode assembly including a cathode, an anode, and a separator interposed between the cathode and the anode, in which the separator is the separator according to one embodiment of the present disclosure.

In one embodiment of the present disclosure, the cathode and the anode are not particularly limited, and may be used in a form in which an electrode active material is bound to a current collector according to a conventional method known in the art.

Non-limiting examples of a cathode active material of the electrode active materials include conventional cathode active materials that can be used for cathodes of conventional electrochemical devices. Specifically, examples include, but are not limited to, lithium transition metal oxides, lithium metal iron phosphate oxides, lithium nickel-manganese-cobalt oxides, lithium nickel-manganese-cobalt oxides partially substituted with another transition metal, and mixtures of two or more thereof. More specific examples of the cathode active material include, but are not limited to: layered compounds of lithium cobalt oxides (LiCoO$_2$), lithium nickel oxides (LiNiO$_2$), etc., or compounds substituted with one or more transition metals; lithium manganese oxides such as compounds with a chemical formula of Li$_{1x}$Mn$_{2-x}$O$_4$ (where x is 0 to 0.33), LiMnO$_3$, LiMn$_2$O$_3$, and LiMnO$_2$; lithium copper oxides (Li$_2$CuO$_2$); vanadium oxides such as LiV$_3$O$_8$, LiV$_3$O$_4$, V$_2$O$_3$, and Cu$_2$V$_2$O$_7$; Ni-site lithium nickel oxides represented by a chemical formula of LiNi$_{1-x}$M$_x$O$_2$ (where M = Co, Mn, Al, Cu, Fe, Mg, B, or Ga, and x = 0.01 to 0.3); lithium manganese composite oxides represented by a chemical formula of LiMn$_{2-x}$M$_x$O$_2$ (where M = Co, Ni, Fe, Cr, Zn, or Ta, and x = 0.01 to 0.1) or a chemical formula of Li$_2$Mn$_3$MO$_8$ (where M = Fe, Co, Ni, Cu, or Zn); lithium metal phosphate LiMPO$_4$ (where M is M = Fe, CO, Ni, or Mn); lithium nickel-manganese-cobalt Oxides Li$_{1+x}$(Ni$_a$Co$_b$Mn$_c$)$_{1-x}$O$_2$ (x = 0 to 0.03, a = 0.3 to 0.95, b = 0.01 to 0.35, c = 0.01 to 0.5, and a+b+c=1); lithium nickel-manganese-cobalt oxides partially substituted with aluminum, Li$_a$[Ni$_b$Co$_c$Mn$_d$Al$_e$]$_{1-f}$M1$_f$O$_2$ (M1 is one or more selected from the group consisting of Zr, B, W, Mg, Ce, Hf, Ta, La, Ti, Sr, Ba, F, P, and S, and 0.8≤a≤1.2, 0.5≤b≤0.99, 0<c<0.5, 0<d<0.5, 0.01≤e≤0.1, and 0≤f≤0.1); lithium-nickel-manganese-cobalt oxides partially substituted with a transition metal, Li$_{1x}$(Ni$_a$Co$_b$Mn$_c$M$_d$)$_{1-x}$O$_2$(x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg, and Mo), disulfide compounds; and Fe$_2$(MoO$_4$)$_3$.

Non-limiting examples of the anode active material of the electrode active materials include conventional anode active materials that can be used for an anode of a conventional electrochemical device. More specific examples include: lithium metal oxides; carbon such as hard carbon and soft carbon; sulfur (S); metal composite oxides such as LixFe$_2$O$_3$(0≤x≤1), Li$_x$WO$_2$ (0≤x≤1), and Sn$_x$Me$_{1-x}$Me'$_y$O$_z$ (Me: Mn, Fe, Pb, or Ge; Me': Al, B, P, Si, elements of Groups 1, 2, and 3 of the periodic table, or halogen; 0<x≤1; 1≤y≤3; and 1≤z≤8); lithium metal; lithium alloy; silicon-based alloy; tin-based alloy; metal oxides such as SnO, SnO$_2$, PbO, PbO$_2$, Pb$_2$O$_3$, Pb$_3$O$_4$, Sb$_2$O$_3$, Sb$_2$O$_4$, Sb$_2$O$_5$, GeO, GeO$_2$, Bi$_2$O$_3$, Bi$_2$O$_4$, and Bi$_2$O$_3$; conductive polymers such as polyacetylene; Li-Co-Ni-based materials; and one or mixtures of two or more of lithium titanium composite oxides and titanium oxides.

Non-limiting examples of the cathode current collector include foils made of aluminum, nickel, or a combination of aluminum and nickel. Non-limiting examples of the anode current collector include foils made of copper, gold, nickel, or any combination thereof.

In one embodiment of the present disclosure, the electrode assembly includes the above-described separator in the form of a strip of the lithium secondary battery, and at least one pair of cathode and anode respectively laminated on upper and lower surfaces of the strip-shaped separator with a predetermined gap between each electrode and the separator. The laminate is folded in a zigzag fashion and is hot-pressed with heat and/or pressure applied thereto. This method is called a zigzag stacking (ZZS) process.

In one embodiment of the present disclosure, since the separator has excellent heat resistance and good adhesion to the electrodes, at the time of performing a hot press process for fixing the separator and the electrodes, it is allowed that the hot press process is performed under more relaxed conditions than a conventional hot press process for lamination of a conventional separator and electrodes.

For example, when the hot press process is performed at a temperature within the range of 50°C to 110°C at a pressure in the range of 3 MPa to 10 MPa, the adhesion between the separator and the electrodes (cathode and anode) is excellent, and the separator exhibits excellent ion conductivity, heat resistance, and insulation performance.

In one embodiment of the present disclosure, the electrode assembly of the lithium secondary battery is accommodated in a casing. The casing may be a casing commonly used as a battery casing, and is not particularly limited in terms of appearance depending on the use of the battery. For example, the casing may have a cylindrical can shape, a prismatic shape, a pouch shape, or a coin shape. When the electrode assembly is prepared as described above, the electrode assembly is inserted into a casing in a conventional manner, an electrolyte is injected into the casing, and the casing is sealed to produce a lithium secondary battery.

Non-limiting examples of the electrolyte is a solution containing an organic solvent and a salt dissociated or dissolved in the solvent, the salt having a form of $A^+B^-$, in which: $A^+$ represents alkali metal cations such as $Li^+$, $Na^+$, $K^+$ or a combination thereof; $B^-$ represents anions such as $PF_6^-$, $BF_4^-$, $Cl^-$, $Br^-$, $I^-$, $ClO_4^-$, $AsF_6^-$, $CH_3CO_2^-$, $CF_3SO_3^-$, $(CF_3SO_2)_2^-$, $(CF_2SO_2)_3^-$ or a combination thereof; and the organic solvent includes propylene carbonate (PC), ethylene carbonate (EC), diethylcarbonate (DEC), dimethylcarbonate (DMC), dipropylcarbonate (DPC), dimethylsulfoxide, acetonitrile, dimethoxyethane, diethoxyethane, tetrahydrofuran, N-methyl-2-pyrrolidone (NMP), ethylcarbonate (EMC), $\gamma$-butyrolactone, or a mixture thereof. However, the salt and the organic solvent are not limited thereto.

In addition, according to another aspect of the present disclosure, a lithium secondary battery including a battery module as a unit cell, a battery pack including the battery module, and a device including the battery pack as a power source may be provided. Specific examples of the device include, but are not limited to: power tools powered for operation by an electric motor; electric vehicles including electric vehicle (EVs), hybrid electric vehicles (HEVs), plug-in hybrid electric vehicles (PHEVs), and the like; electric two-wheeled vehicles such as electric bicycles (E-bikes) and electric scooters (E-scooters); electric golf carts; and energy storage systems.

Hereinafter, the present disclosure will be described in detail with reference to examples. The examples according to the present disclosure described below may be modified into various forms, so that the scope of the present disclosure should not be construed as being limited to the examples described in detail below. The examples are provided to aid those skilled in the art to more easily understand the present disclosure.

**[Preparation Example: Manufacture of Separator]**

**Example 1**

A separator having a structure in which a second aqueous binder layer, a second coating layer, a porous polymer substrate, a first coating layer, and a first aqueous binder layer are sequentially stacked was prepared through a method described below.

Preparation of porous polymer substrate

As the porous polymer substrate, a wet polyethylene substrate (thickness: 9 $\mu$m) with 45% porosity, manufactured by Toray, was prepared.

Formation of first coating layer and second coating layer

A slurry in which inorganic particles and a coating layer binder were dispersed was prepared by a method described below.

4 parts by weight of cyanoethyl polyvinyl alcohol (MW = 100,000 g/mol) was added to 100 parts by weight of water and was then slowly dispersed. Afterwards, aluminum nitride particles (AIN) having an average particle diameter ($D_{50}$) of 500 nm were added to and mixed with the suspension in which cyanoethyl polyvinyl alcohol was dispersed. The mixture was sufficiently stirred and dispersed to obtain a slurry for formation of an aluminum coating layer having the average particle diameter (D50). The prepared slurry had a solid content of 23% by weight, and the weight ratio of aluminum nitride particles and cyanoethyl polyvinyl alcohol in the slurry was 95:5.

The prepared slurry was applied to both sides of the prepared porous polymer substrate, and the applied slurry was sufficiently dried with 60°C warm air to form a first coating layer and a second coating layer each having a thickness of 2 $\mu$m.

Formation of a first binder layer and a second binder layer

A slurry in which a particle type binder was dispersed was prepared by a method described below.

PVDF-HFP (MW = 400,000 g/mol, average particle diameter ($D_{50}$) = 250 nm, HFP = 5% by weight) as an aqueous particle type binder was dispersed in water to prepare a slurry for formation of a first aqueous binder layer. The prepared slurry had a solid content of 5% by weight.

A slurry for formation of a second aqueous binder layer was prepared in the same manner as described above, except that polymethyl methacrylate (PMMA) (MW = 200,000 g/mol, and average particle diameter ($D_{50}$) = 350 nm) was used instead of PVDF-HFP, and the solid content was 5% by weight.

The prepared slurry for forming the first aqueous binder layer and the slurry for forming the second aqueous binder layer were coated on the respective surfaces of the first coating layer and second coating layer, and the applied slurry was dried at 60°C to form aqueous binder layers each having a thickness of 0.5 $\mu$m.

**Example 2**

A separator was prepared in the same manner as in Example 1, except that in the slurry for forming the first aqueous binder layer of Example 1, poly(vinylidenefluoride) (PVDF) (MW= 400,000) g/mol, average particle diameter ($D_{50}$) = 250 nm) was used instead of PVDF-HFP, and in the slurry for forming the second aqueous binder layer of Example 1, poly (ethylhexyl acrylate) (MW = 200,000 g/mol, average particle diameter ($D_{50}$) = 350 nm) was used instead of polymethyl methacrylate.

**Comparative Example 1**

A safety-reinforced separator (SRS) was prepared using a soluble PVDF-HFP binder and alumina by a method described below.

Specifically, PVDF-HFP (MW = 400,000 g/mol, HFP = 8% by weight) and alumina with an average particle diameter ($D_{50}$) of 500 nm were added in a weight ratio of 1:4 to acetone serving as a solvent, followed by mixing for about 2 hours using a bead mill mixer to prepare a slurry for forming a coating layer.

The prepared slurry for forming the coating layer was applied to both sides of the same porous polymer substrate as in Example 1 using a bar coater, and the applied slurry was dried at a relative humidity of 45% at room temperature (23°C) to obtain a separator.

Both of the surfaces of the porous polymer layer (9 $\mu$m) of the obtained separator were coated with respective porous coating layers. Each of the porous coating layers had a thickness of 6 $\mu$m.

**Comparative Example 2**

Alumina (average particle diameter ($D_{50}$) = 500 nm) and PVDF-HFP (MW = 400,000 g/mol, average particle diameter ($D_{50}$) = 250 nm, HFP 5% by weight) serving as an aqueous particle type binder were added in a weight ratio of 95:5 to water serving as a solvent, followed by mixing for 2 hours using a bead mill mixer to prepare a slurry.

The prepared slurry was applied to both sides of the same porous polymer substrate as in Example 1 using a bar coater, and the applied slurry was dried at 90°C to prepare a separator.

**Comparative Example 3**

A separator was manufactured in the same manner as in Example 1, except that the first aqueous binder layer and second aqueous binder layer were not formed.

**Comparative Example 4**

A separator was manufactured in the same manner as in Example 1, except that both of the first aqueous binder layer and the second aqueous binder layer were formed using the slurry for forming the first aqueous binder layer.

**Comparative Example 5**

A separator was manufactured in the same manner as in Example 1, except that both of the first aqueous binder layer and the second aqueous binder layer were formed using the slurry for forming the second aqueous binder layer.

**Comparative Example 6**

A first coating layer and a second coating layer were formed in the same manner as in Example 1, except that alumina (average particle diameter ($D_{50}$) = 500 nm) was used as inorganic particles to prepare the slurry for forming each of the first coating layer and second coating layer instead of using aluminum nitride.
Next, a separator was manufactured in the same manner as in Example 1, except that both of the first aqueous binder layer and the second aqueous binder layer were formed using the slurry for forming the second aqueous binder layer.

**Comparative Example 7**

A separator was manufactured in the same manner as in Example 1, except that alumina (average particle diameter ($D_{50}$) = 500 nm) was used as inorganic particles to prepare the slurry for forming each of the first coating layer and second coating layer instead of using aluminum nitride.

**Comparative Example 8**

The slurry for forming the first coating layer and the slurry for forming the first aqueous binder layer, which were prepared as in Example 1, were mixed to obtain an aqueous slurry for forming a first porous coating layer.
The slurry for forming the second coating layer and the slurry for forming the second aqueous binder layer, which were prepared as in Example 1, were mixed to obtain an aqueous slurry for forming a second porous coating layer.
One surface of the same porous polymer substrate as in Example 1 was coated with the slurry for forming the first porous coating layer, and the other surface was coated with the slurry for forming the second coating layer at the same time, and sufficiently dried with 60°C warm air to form first porous coating layer and second porous coating layer each having a thickness of 2.5 um. As a result, a separator was obtained.

[Evaluation of physical properties of separator]

The physical properties of the separators manufactured as in Example 1 and Comparative Examples 1 to 8 were evaluated using a method described below.

**Thermal shrinkage (%)**

A target separator to be evaluated is cut into fragments with a 50 mm x 50 mm size, and the fragment is placed between A4 paper sheets and is then placed in a 120°C convection oven for 1 hour. Next, the thermal shrinkage rates in the machine direction (MD) and the transverse direction (TD) were measured.

```
        The thermal shrinkage rate (%) was calculated by [(initial

    length - length after 120°C thermal treatment)/(initial length)]

    X 100.
```

**Dielectric breakdown voltage (V)**

The dielectric breakdown voltage was measured using an AC/DC/IR Hi-Pot tester.
Specifically, release PET sheets with a 10 cm x 10 cm size were placed on top and bottom of the 5 cm X 5 cm fragment of the target separator to be evaluated. The release PET sheets were placed in contact with the separator. A stack of the separator and the release PET sheets was hot-pressed at a temperature of 70°C at a pressure of 5.2 MPa for 10 seconds to prepare a compressed separator sample.
The prepared compressed separator sample was placed between aluminum jigs (an upper jig with a diameter of 30 mm and a lower jig with a size of 50 mm x 100 mm) and the voltage at which the failure conditions (>0.5 mA, 3 sec) occurred was detected using a Hi-pot tester. The measurement conditions were set to DC, a current of 0.5 mA, and a voltage step-up rate of 100 V/s (up to 3 kV). The measurement value was determined as an average value of 30 samples.

When the dielectric breakdown voltage value was 1000 V or more, it was determined electrode assemblies were able to be manufactured without causing a short circuit during an assembly process.

**Air permeability increase rate (%)**

The rate of increase in air permeability of the separator was evaluated according to the formula shown below.

$$\text{Air permeability increase rate (\%)} = [(\text{Air permeability of the manufactured separator} - \text{air permeability of the porous polymer substrate})/\text{air permeability of the porous polymer substrate}] * 100$$

Air permeability (passage time, Gurley) was measured by the ASTM D-2873 method. The Gurley value was measured using a Gurley type Densometer (No. 158) manufactured by Toyoseiki Seisaku-sho, Ltd. according to the JIS Gurlye measurement method. The air permeability value was expressed as the time in seconds it takes for 100 ml of air to pass through a 1 $in^2$-area cross section of a separator, under a pressure of 12.2 in $H_2O$. That is, the air permeability value refers to the passage time of air.

**Dry adhesive strength between anode and separator**

Natural graphite, SBR, CMC, and carbon black (90:2.5:2.5:5 in a weight ratio) were added to water to obtain an anode slurry, and the anode slurry was applied on a copper thin film (thickness = 20 $\mu$m) at a loading amount of 5 $mg/cm^2$, and then dried. Next, it was rolled in the conditions of 90°C and 8.5 MPa and cut into fragments with a size of 50 mm (length) and 25 mm (width) to prepare standard anode.

Next, after cutting the target separator to into fragments with a size of 70 mm (length) x 25 mm (width), the fragment of the separator was placed such that the standard anode was in contact with the coating layer and laminated using a press in the conditions of 60°C and 6.5 MPa for 1 s, to prepare a specimen.

The prepared specimen was attached and fixed to a glass plate using double-sided tape. In this case, the anode was placed facing the glass plate. The separator part of the specimen was peeled off using Instron's UTM equipment at 25°C at an angle of 180° at a speed of 300 mm/min, and the strength at the time is measured and taken as the dry adhesive strength.

It was determined that an electrode assembly could be manufactured through electrode bonding only when the dry adhesive strength was 70 gf/25 mm or more.

**Wet adhesive strength between electrode and separator**

First, after assembling a mono-cell, an electrolyte was injected so that an electrode assembly was activated and impregnated with the electrolyte. Thereafter, the electrode assembly was taken out of the mono-cell, the electrode assembly was sampled to have a width of 25 mm, and the electrode assembly was fixed to a glass plate using double-sided tape in a state in which the electrode of the sampled electrode assembly faced the glass plate. The separator part of the specimen was peeled off using Instron's UTM equipment at 25°C at an angle of 90° at a speed of 200 mm/min, and the strength at the time was measured.

Regarding wet adhesive strength, both the cathode-separator adhesive strength and the anode-separator adhesive strength of the mono-cell were evaluated. It was confirmed that only when the wet adhesive strength was 10 gf/25 mm or more, the electrode assembly could be manufactured through electrode bonding.

The mono-cell was prepared by a method described below.

1) Preparation of cathode

A cathode active material ($LiNi_{0.8}Mn_{0.1}Co_{0.1}O_2$), a conductive material (carbon black), a dispersant, and a binder resin (mixture of PVDF-HFP and PVDF) were mixed with water in a weight ratio of 97.5:0.7:0.14:1.66 to obtain a cathode active material slurry in which the concentration of the components except for water was 50% by weight. Next, the slurry was applied to the surface of an aluminum thin film (thickness = 10 $\mu$m) and dried to prepare a cathode having a cathode active material layer (thickness = 120 $\mu$m).

2) Preparation of anode

Graphite (natural graphite and artificial graphite), a conductive material (carbon black), a dispersant, and a binder resin (mixture of PVDF-HFP and PVDF) were mixed with water in a weight ratio of 97.5:0.7:0.14:1.66 to obtain an anode active material slurry in which the concentration of the remaining components except for water was 50% by weight. Next, the slurry was applied to the surface of a copper thin film (thickness = 10 $\mu$m) and dried to prepare an anode having an anode active material layer (thickness = 120 $\mu$m).

3) Lamination

An electrode assembly was obtained by interposing the target separator to be evaluated between the anode and the cathode and performing a lamination process. The lamination process was performed at 70°C at 5.2 MPa for 10 seconds using a hot press.

4) Injection of electrolyte

An electrolyte was prepared by dissolving 1.0 M of lithium hexafluorophosphate ($LiPF_6$) in an organic solvent composed of ethylene carbonate (EC), ethyl methyl carbonate (EMC), and diethyl carbonate (DEC) in a volume ratio 3:4:3.

[Table 1]

| Classif ication | Thermal shrinkage (%) | | Dielectric breakdown voltage (V) | Air permeabi lity increase rate (%) | Dry adhesive strength (gf/25 mm) | Wet adhesive strength (gf/25 mm) | |
|---|---|---|---|---|---|---|---|
| | MD | TD | | | Anode | Cathode | Anode |
| Compara tive Example 1 | 57 | 51 | 832 | 114 | 75 | 24 | 11 |
| Compara tive Example 2 | 1 | 1 | 796 | 21 | 0 | 0 | 0 |
| Compara tive Example 3 | 1 | 0 | 1739 | 20 | 0 | 0 | 0 |
| Compara tive Example 4 | 1 | 1 | 1803 | 23 | 24 | 41 | 3 |
| Compara tive Example 5 | 0 | 1 | 1792 | 24 | 151 | 1 | 34 |
| Compara tive Example 6 | 1 | 1 | 1002 | 21 | 81 | 2 | 21 |
| Compara tive Example 7 | 1 | 0 | 867 | 19 | 157 (acryl side) | 49 | 36 |
| Compara tive Example 8 | 43 | 38 | 1599 | 33 | 121 (acryl side) | 11 | 9 |

(continued)

| Classif ication | Thermal shrinkage (%) | | Dielectric breakdown voltage (V) | Air permeabi lity increase rate (%) | Dry adhesive strength (gf/25 mm) | Wet adhesive strength (gf/25 mm) | |
|---|---|---|---|---|---|---|---|
| | MD | TD | | | Anode | Cathode | Anode |
| Example 1 | 0 | 1 | 1813 | 20 | 168 (acryl side) | 58 | 37 |
| Example 2 | 1 | 1 | 1799 | 18 | 150 (acryl side) | 61 | 35 |

Referring to the evaluation results shown in Table 1, it was confirmed that Examples 1 and 2 according to an embodiment of the present disclosure were superior in physical properties compared to the separators of Comparative Examples 1 to 8.

Specifically, it was confirmed that the separator according to Comparative Example 1 exhibited a high thermal shrinkage rate and was particularly unsatisfactory in terms of dielectric breakdown voltage and air permeability increase rate. In the case of Comparative Example 2 in which the aqueous binder layer was not formed and alumina was applied as inorganic particles to the coating layer, it was confirmed that the dielectric breakdown voltage was low, and both of the dry adhesive strength and the wet adhesive strength of the separator with respect to the electrode were unsatisfactory. In the case of Comparative Example 3 in which aluminum nitride was applied as inorganic particles to the coating layer, it was confirmed that the dry adhesive strength and wet adhesive strength of the separator with respect to the electrode were poor because the aqueous binder layer was not formed.

In the case of Comparative Example 4, aluminum nitride was applied as inorganic particles to the coating layer and an aqueous binder layer was formed, it was confirmed that both of the dry adhesive strength and wet adhesive strength of the separator with respect to the anode were poor because a fluorine-based particle type binder was applied to each of the surface of the separator. In the case of Comparative Example 5, since the acrylic particle type binder was applied to both sides of the separator, it was confirmed that the adhesive strength of the separator with respect to the cathode was poor. In the case of Comparative Example 6, as in Comparative Example 5, the acrylic particle type binder was applied to both sides, and alumina was applied as inorganic particles to the coating layer. Therefore, the breakdown voltage value was lowered, and the dry adhesive strength and wet adhesive strength of the separator with respect to the electrode were poor.

In the case of Comparative Example 7, a fluorine-based particle aqueous binder layer and an acrylic particle aqueous binder layer were applied to both sides of the separator, respectively, and alumina was applied as inorganic particles to the coating layers. Therefore, it was confirmed that the dielectric breakdown voltage was low.

On the other hand, in the case of Comparative Example 8, aluminum nitride was used as inorganic particles in the coating layer of the separator, and a fluorine-based particle type binder and an acrylic particle type binder were applied as binders to both sides of the separator, respectively. In the case, a one-component slurry in which inorganic particles and particle type binder are mixed was used to form the coating layers. In this case, it was confirmed that the thermal shrinkage characteristic and the electrode adhesive strength were not good.

[Explanation of Reference Numerals in Drawings]

100: Separator
1: Porous polymer substrate
11: First coating layer
12: Second coating layer
111: First aqueous binder layer
122: Second aqueous binder layer
110, 110': First particle type binder
120, 120': Second particle type binder

Claims

1. A separator for a lithium secondary battery, the separator comprising:

a porous polymer substrate;

a first coating layer formed on one side surface of the porous polymer substrate;

a second coating layer formed on the other side surface of the porous polymer substrate;

a first aqueous binder layer formed on a surface of the first coating layer; and

a second aqueous binder layer formed on a surface of the second coating layer,

wherein the first coating layer and the second coating layer each independently comprise inorganic particles and a coating layer binder, wherein the inorganic particles comprise aluminum nitride AlN,

the first aqueous binder layer comprises a first particle type binder and the second aqueous binder layer comprises a second particle type binder, and

the first particle type binder and the second particle type binder are different from each other, and wherein the first particle type binder and the second particle type binder each independently comprise a fluorine-based binder, an acrylic-based binder, or both.

2. The separator of claim 1, wherein the first particle type binder and the second particle type binder each independently have an average particle diameter $D_{50}$ of 0.05 to 0.5 $\mu$m.

3. The separator of claim 1, wherein the fluorine-based binder comprises: poly(vinylidenefluoride) PVDF; a copolymer of a vinylidenefluoride monomer and one type or 2 or more types selected from trifluoroethylene TrFE, tetrafluoroethylene TFE, hexafluoropropylene HFP, trichloroethylene TrCE, trichlorofluoroethylene TCFE, chlorotrifluoroethylene CTFE, polymethylmethacrylate PMMA, and polyvinylacetate PVAc; or a mixture of two or more thereof.

4. The separator of claim 1, wherein the acrylic-based binder comprises poly(methylmethacrylate), poly(ethylhexyl acrylate), poly(butylacrylate), poly(acrylonitrile), a copolymer of ethylhexyl acrylate and methyl methacrylate, a copolymer of butylacrylate and methyl methacrylate, an ethyl acrylate-acrylic acid-N,N-dimethylacrylamide copolymer, an ethyl acrylate-acrylic acid-2-(diethylamino)ethyl acrylate copolymer, an ethyl acrylate-acrylic acid-N,N-diethylacrylamide copolymer, an ethyl acrylate-acrylic acid-2-(diethylamino)ethyl acrylate, or a mixture of two or more thereof.

5. The separator of claim 1, wherein the coating layer binder comprises an aqueous particle type binder, and the coating layer binder is the same as or different from the binder contained in the first aqueous binder layer and the second aqueous binder layer.

6. The separator of claim 1, wherein the separator has a dry adhesive strength of 70 gf/25 mm or more with respect to an electrode.

7. The separator of claim 1, wherein the separator has a wet adhesive strength of 10 gf/25 mm or more with respect to an electrode.

8. The separator of claim 1, wherein an adhesive strength between the porous polymer substrate and either one or both of the first coating layer and the second coating layer is 60 gf/15 mm or more.

9. The separator of claim 1, wherein the first coating layer and the second coating layer each independently have a thickness of 5 $\mu$m or less.

10. The separator of claim 1, wherein the first aqueous binder layer and the second aqueous binder layer each independently have a thickness of 2 $\mu$m or less.

11. The separator of claim 1, wherein the porous polymer substrate has a thickness of 15 $\mu$m or less.

12. A lithium secondary battery comprising an electrode assembly comprising a cathode, an anode, and a separator interposed between the cathode and the anode,

wherein the separator is the separator of any one of claims 1 to 11.

**FIG.1**

**FIG.2**

<div align="center">

**INTERNATIONAL SEARCH REPORT**

</div>

| | International application No. |
|---|---|
| | **PCT/KR2023/002256** |

**A.  CLASSIFICATION OF SUBJECT MATTER**

**H01M 50/457**(2021.01)i; **H01M 50/446**(2021.01)i; **H01M 50/431**(2021.01)i; **H01M 50/489**(2021.01)i; **H01M 10/0525**(2010.01)i

According to International Patent Classification (IPC) or to both national classification and IPC

**B.  FIELDS SEARCHED**

Minimum documentation searched (classification system followed by classification symbols)

H01M 50/457(2021.01); H01M 2/16(2006.01); H01M 50/403(2021.01); H01M 50/409(2021.01); H01M 50/446(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 무기물 입자(inorganic particle), 불소계 바인더(fluorine-based binder), 아크릴레이트계 바인더(acrylate-based binder)

**C.  DOCUMENTS CONSIDERED TO BE RELEVANT**

| Category* | Citation of document, with indication, where appropriate, of the relevant passages | Relevant to claim No. |
|---|---|---|
| Y | KR 10-2020-0051370 A (LG CHEM, LTD.) 13 May 2020 (2020-05-13)<br>See paragraphs [0097], [0117], [0121], [0161], [0163], [0167]-[0168] and [0171]; and claims 1, 12 and 14-15. | 1-12 |
| Y | KR 10-2016-0069431 A (SAMSUNG SDI CO., LTD.) 16 June 2016 (2016-06-16)<br>See paragraph [0020]; and claims 1 and 5. | 1-12 |
| A | KR 10-2022-0011097 A (LG ENERGY SOLUTION, LTD.) 27 January 2022 (2022-01-27)<br>See entire document. | 1-12 |
| A | KR 10-2022-0047200 A (LG ENERGY SOLUTION, LTD.) 15 April 2022 (2022-04-15)<br>See entire document. | 1-12 |
| A | JP 2016-042454 A (SAMSUNG SDI CO., LTD.) 31 March 2016 (2016-03-31)<br>See entire document. | 1-12 |

☐ Further documents are listed in the continuation of Box C.      ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **30 May 2023** | **30 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/002256**

| Patent document cited in search report | | | Publication date (day/month/year) | Patent family member(s) | | | Publication date (day/month/year) |
|---|---|---|---|---|---|---|---|
| KR | 10-2020-0051370 | A | 13 May 2020 | CN | 111742425 | A | 02 October 2020 |
| | | | | EP | 3764427 | A1 | 13 January 2021 |
| | | | | EP | 3764427 | A4 | 23 June 2021 |
| | | | | JP | 2021-513190 | A | 20 May 2021 |
| | | | | JP | 7142708 | B2 | 27 September 2022 |
| | | | | KR | 10-2385925 | B1 | 11 April 2022 |
| | | | | US | 2020-0350546 | A1 | 05 November 2020 |
| | | | | WO | 2020-096310 | A1 | 14 May 2020 |
| KR | 10-2016-0069431 | A | 16 June 2016 | KR | 10-2295367 | B1 | 31 August 2021 |
| | | | | US | 2016-0164059 | A1 | 09 June 2016 |
| | | | | US | 9871242 | B2 | 16 January 2018 |
| KR | 10-2022-0011097 | A | 27 January 2022 | CN | 115803959 | A | 14 March 2023 |
| | | | | EP | 4152509 | A1 | 22 March 2023 |
| | | | | WO | 2022-019572 | A1 | 27 January 2022 |
| KR | 10-2022-0047200 | A | 15 April 2022 | EP | 4138198 | A1 | 22 February 2023 |
| | | | | WO | 2022-075823 | A1 | 14 April 2022 |
| JP | 2016-042454 | A | 31 March 2016 | CN | 105374968 | A | 02 March 2016 |
| | | | | CN | 105374968 | B | 26 March 2021 |
| | | | | EP | 2985813 | A1 | 17 February 2016 |
| | | | | EP | 3605650 | A1 | 05 February 2020 |
| | | | | JP | 6585906 | B2 | 02 October 2019 |
| | | | | KR | 10-2016-0020283 | A | 23 February 2016 |
| | | | | KR | 10-2246767 | B1 | 30 April 2021 |
| | | | | US | 10217985 | B2 | 26 February 2019 |
| | | | | US | 2016-0049628 | A1 | 18 February 2016 |

Form PCT/ISA/210 (patent family annex) (July 2022)

**EP 4 346 001 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220068533